(19) **Europäisches Patentamt / European Patent Office / Office européen des brevets**

(11) **EP 1 739 853 A1**

(12) # EUROPEAN PATENT APPLICATION

(43) Date of publication:
**03.01.2007 Bulletin 2007/01**

(51) Int Cl.:
**H04B 7/005** (2006.01)

(21) Application number: **06291090.6**

(22) Date of filing: **03.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.07.2005 US 696010 P**

(71) Applicant: **Nortel Networks Limited St.Laurent, Quebec H4S 2A9 (CA)**

(72) Inventors:
• **Vallette, Laurent**
  **78340 Les Clayes sous Bois (FR)**
• **Bressanelli, Dominique**
  **65712 Bad Soden am Taunus (DE)**

(74) Representative: **Loisel, Bertrand et al Cabinet Plasseraud 52 rue de la Victoire 75440 Paris Cedex 09 (FR)**

(54) **Method and apparatus for adjusting transmission power**

(57)     The present invention relates to a method of adjusting transmission power of a physical channel of a base station in a radio communication system, wherein at least one transport channel is mapped to the physical channel. In the method a transport format of the at least one transport channel is determined and the transmission power of the at least one physical channel is adjusted based on parameters comprising the transport format.

FIG. 4

EP 1 739 853 A1

**Description**

The present invention relates to digital transmissions, and more precisely to the transmission power management in a base station of a wireless communication system.

BACKGROUND OF THE INVENTION

In the present description, the invention will be described more particularly in its non-limiting application to third generation radio communication networks of the Universal Mobile Telecommunication System (UMTS) type. A general description of this system is presented in the book: "WCDMA for UMTS" by Harri Holma and Antti Toskala, ISBN 0 471 48687 6. In this system, the invention finds application within the framework of downlinks, that is to say from the base stations to the terminal equipment, in frequency division duplex mode (FDD).

UMTS is a radio communication system using code-division multiple access (CDMA), that is to say the symbols transmitted are multiplied by spreading codes consisting of samples known as "chips" whose rate (3.84 Mchip/s in the case of UMTS) is greater than that of the symbols transmitted. The spreading codes distinguish between various physical channels (PhCHs) which are superimposed on the same transmission resource constituted by carrier frequency. The auto- and cross-correlation properties of the spreading codes enable the receiver to separate the PhCHs and to extract the symbols intended for it. For UMTS in FDD mode in the downlink, a scrambling code is allocated to each cell of a base station, and various physical channels used by this base station are distinguished by mutually orthogonal "channelization" codes. For each PhCH, the global spreading code is the product of the "channelization" code and the scrambling code of the base station. The spreading factor (equal to the ratio of the chip rate to the symbol rate) is a power of 2 lying between 4 and 512. This factor is chosen as a function of the bit rate of the symbols to be transmitted on the PhCH.

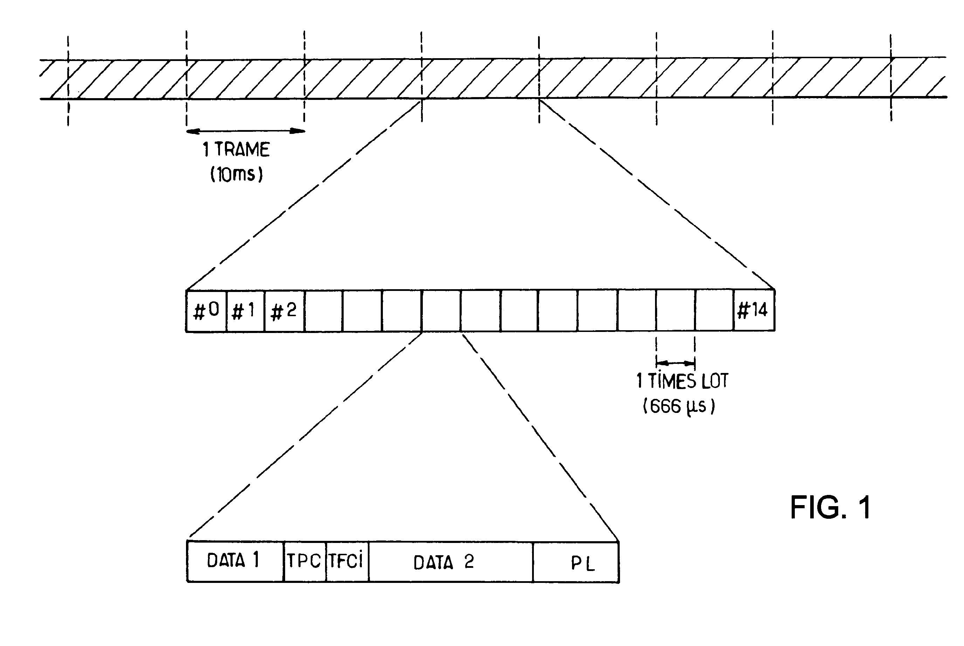

The various physical channels obey a frame structure illustrated in Figure 1. The 10 ms frames follow one another on the carrier frequency used by the base station. Each frame is subdivided into 15 time slots of 666 $\mu$s. Each slot can carry the superimposed contributions of one or more physical channels, comprising common channels and dedicated channels DPCH ("Dedicated Physical CHannel"). The lower chart of Figure 1 illustrates the downlink DPCH time slot structure in FDD mode. Each time slot comprises:

- a certain number of pilot symbols (PLs) placed at the end of the slot. Known a priori to the terminal, these symbols PL enable it to acquire the synchronization and to estimate parameters which are useful in demodulating the signal;
- a transport format combination indicator (TFCI);
- transmit power control (TPC) bits to be used by the terminal in the uplink; and
- two data fields, denoted DATA1 and DATA2, placed either side of the TPC field.

The DPCH can thus be seen as amalgamating a physical channel dedicated to control, or dedicated physical control channel (DPCCH), corresponding to the fields TFCI, TPC and PL, and a physical channel dedicated to the data, or dedicated physical data channel (DPDCH), corresponding to the fields DATA1 and DATA2.

For one and the same communication, it is possible to establish several DPCHs corresponding to different "channelization" codes, whose spreading factors may be equal or different. This situation is encountered in particular when a DPDCH is insufficient to provide the transmission bit rate required by the application. In what follows, Y will denote the number, equal to or greater than 1, of downlink physical channels used for one and the same communication from a base station.

Moreover, this same communication can use one or more transport channels (TrCH). Multiplexed TrCHs are typically used for multimedia transmissions, in which signals of different natures to be transmitted simultaneously require different transport characteristics, in particular as regards protection against transmission errors. On the other hand, certain coders may output, in order to represent a given signal (audio for example), several streams of symbols having different perceptual importances and therefore requiring different degrees of protection. Multiple TrCHs are then used to transport these various symbol streams. In what follows, X will denote the number, equal to or greater than 1, of transport channels used for a given communication on the aforesaid Y physical channels.

For each transport channel i ($1 \leq i \leq X$), there is defined a transmission time interval (TTI) composed of $F_i$ consecutive frames, with $F_i$ = 1, 2, 4 or 8. Typically, the shorter the delay with which the signal conveyed by the transport channel must be received, the shorter is the TTI used. For example, a TTI of 10 ms ($F_i$ = 1) will be used for a telephony application, while a TTI of 80 ms ($F_i$ = 8) may be used for a data transmission application.

The multiplexing of the X streams of information symbols emanating from the TrCHs on the Y PhCHs is described in detail in the technical specification 3G TS 25.212, "Multiplexing and channel coding (FDD)", version 3.0.0 published in October 1999 by the 3GPP (3rd Generation Partnership Project).

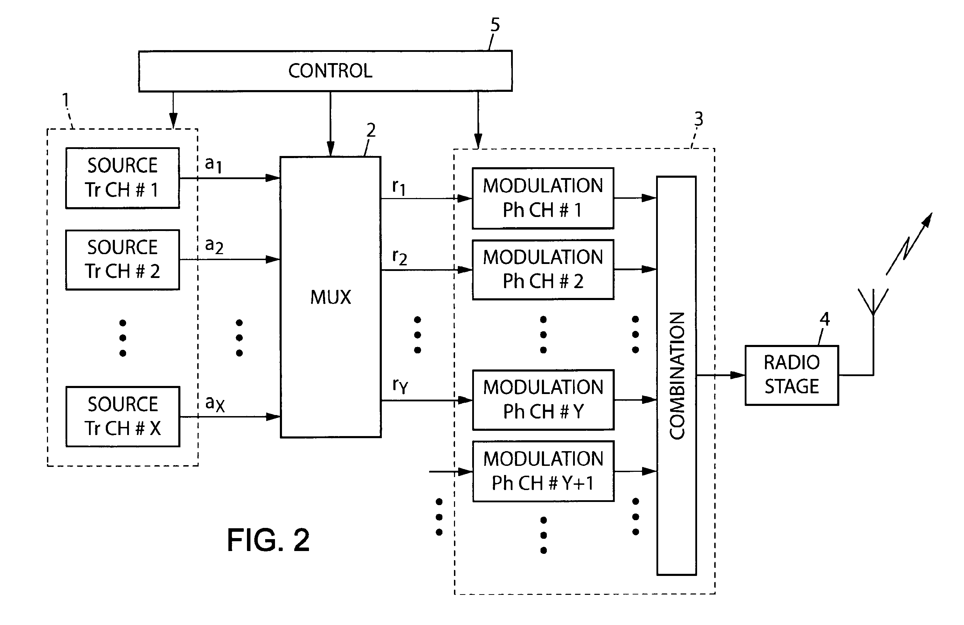

Figure 2 diagrammatically illustrates the sending part of a UMTS base station operating in FDD mode. Block 1 denotes the set of sources respectively outputting streams of information symbols $a_i$ ($1 \leq i \leq X$) in relation to the X TrCHs used in a communication.

The stream $a_i$ to be transmitted on each TRCH i is composed of binary symbols output in the form of successive transport blocks TrBk. Each TrBk is completed by adding thereto a cyclic redundancy code CRC, serving to detect any transmission errors. The TrBk $b_i$ are then concatenated and/or segmented so as to form blocks $o_i$ of appropriate size for the input of a channel coder.

Block 2 multiplexes the streams $a_i$ to form what is referred to as a coded composite transport channel, or CCTrCH, which is subsequently subdivided into one or more physical channels PhCH#j ($1 \leq j \leq Y$) on which synchronized streams of symbols respectively denoted $r_j$ are transmitted.

Block 3 designates the circuits which modulate the streams $r_j$ and combine them to form a signal processed by the radio stage 4 before being sent over the air interface. Block 3 caters for the spreading, by the "channelization" codes assigned to the PhCHs, of each of the streams $r_j$, as well as of any additional streams which may be output in respect of other communications supported at the same moment by the base station, the various streams of symbols thus spread being subsequently summed and then multiplied by the scrambling code of the base station. The sequencing and parameterization of blocks 1, 2, 3 is catered for by a control unit 5 in accordance with the parameters defined for the base station and for the relevant communication.

In the UMTS two channel coding methods have been defined. Half-rate and 1/3-rate convolutional coding are intended to be used with relatively low data rates. For higher data rates 1/3-rate turbo coding can be used and typically brings performance benefits when large enough block sizes are used.

Two effects have been identified as degrading the downlink performance and capacity of the UMTS system:

(1) Turbo coding protection variation, depending on the number of encoded bits.

(2) Transport block size variation, which leads to block error rate (BLER)/bit error rate (BER) ratio variations.

The encoder efficiency, especially when Turbo encoding is applied, increases with the number of encoded bits. A change of the transport format (TF) usually occurs upon traffic changes in the downlink at layer 3. Theoretically, the layer 1 signal-to-interference ratio (SIR) requirement should also change. However, the power control outer loop is not able to adapt the downlink SIR target fast enough since TF may change every TTI. As a result, a SIR overhead is generated by the power control outer loop in case of frequent traffic variation, at the detriment of the system capacity in the downlink.

In the context of interactive or background calls, the traffic is not constant. The current TF can change every TTI, but the power control outer loop is not reactive enough to change the SIR target. The low traffic TF generates peaks of BLER, and from this reason the target SIR is raised unnecessarily if high TFs are generated next. The coding gain of Turbo code improves with number of encoded bits. Hence, the 4x336 combinations for example are more protected than 1 x336 (in the following, an expression of the type "L x M" will refer to a transport format in which L designates the number of transport blocks, and M the size of a transport block in bits).

As far as the transport block size is concerned, for identical BER, when the transport block size changes subsequent to a TF change, the resulting BLER changes as well. This is a statistical effect. The probability that a transport block has at least one bit false (hence CRC error and generating higher BLER) is increasing with the number of bits checked by the same CRC.

SUMMARY OF THE INVENTION

One object of the invention is to limit the above identified deficiencies. More specifically, a more advanced method for controlling a transmission power of a base station of a radio communication system has been invented.

According to a first aspect of the invention there is proposed a method of adjusting transmission power of at least one physical channel of a base station in a radio communication system, wherein at least one transport channel is mapped to the at least one physical channel, the method comprising:

- determining a transport format of the at least one transport channel; and

- adjusting the transmission power of the at least one physical channel based on parameters comprising the transport format.

The invention in accordance with an embodiment of the invention has the advantage that the transmission power can be adjusted so that at the reception BLER values do not fluctuate as much as without the solution proposed here. Thus, a relatively constant BLER value can be achieved for different traffic types. Furthermore, triggering of the outer loop power control can be avoided when the transmission power is adjusted as proposed here. The outer loop power control is used to adjust SIR target in the base station according to the need of the individual radio link.

According to a second aspect of the invention there is proposed a base station in a radio communication system arranged for adjusting transmission power of at least one physical channel, at least one transport channel being mapped to the at least one physical channel, the base station comprising:

- means for obtaining a transport format of the at least one transport channel; and

- means for adjusting the transmission power of the at least one physical channel based on parameters comprising the transport format.

BRIEF DESCRIPTION OF THE FIGURES

Other features and advantages of the invention will become apparent from the following non-limiting description, with reference to the appended drawings, in which:

- Figure 1 is a diagram illustrating the frame structure employed in the downlinks in the UMTS in FDD mode;
- Figure 2 is a schematic block diagram of a base station in which embodiments of the invention may be applied;
- Figure 3 illustrates simulation results, when Viterbi encoder is used;
- Figure 4 illustrates the operation of the invention in accordance with an embodiment compared to a situation in which no power correction is applied, and
- Figure 5 illustrates simulation results, when Turbo encoder is used.

DETAILED DESCRIPTION OF EMBODIMENTS OF THE INVENTION

Some embodiments of the invention will next be described in more detail in the context of the radio communication system of the UMTS type. It is to be noted that the invention can equally be applied to other types of communication systems as well.

To illustrate a need for the transmission power management in accordance with the embodiments of the invention, let us consider a numerical example of the situation.

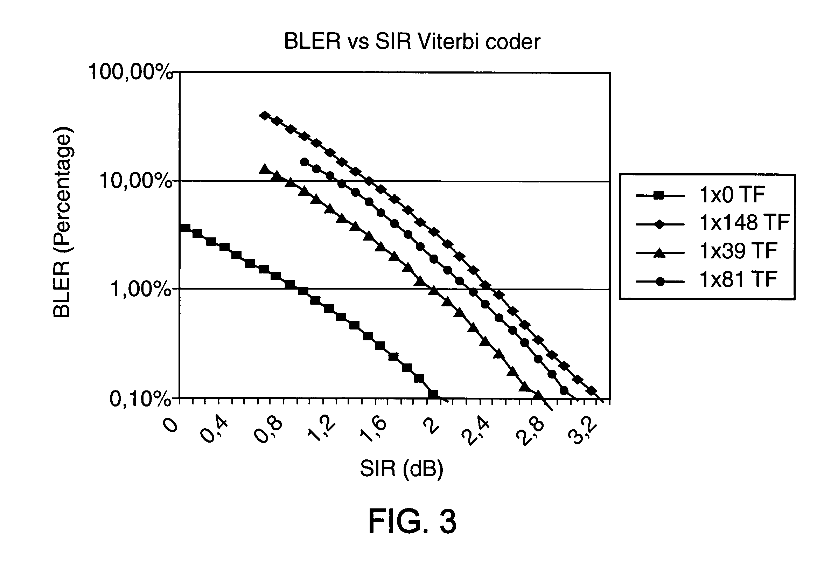

In case of TF of 1x0 (1 TB of 0 bit length) usage for signalling radio bearer (SRB) (12 bits length, corresponding to CRC), BLER is far lower than with TF of 1x148 (160 bits length: data and CRC) (carrying layer 3 control plane) for a given SIR. This can be seen also from Figure 3, which illustrates simulation results. The simulations were done in the presence of Gaussian noise an using 1/3-rate Viterbi convolutional encoding. The power control outer loop does not perform in a satisfactory way in this case. 1x0 combinations for SRB can be used to have an active power control outer loop in case no user traffic is present, and grant protection for 1x148 SRB signalling frames. However, the BLER difference between 1x0 and 1x148 combinations for identical SIR is so high that this degrades the system performance. The high occurrence of 1x0 combinations with low BLER probability is dragging the SIR to low values. The occasional but precious signalling 1x148 combinations have then high BLER probability. Furthermore, for a SRB, the power control outer loop sets the downlink target SIR to 1dB to reach a 1% BLER target in case of TF of 1x0. If a 1x148 SRB frame is then transmitted, its BLER will be 35%.

In case of adaptative multi rate (AMR) voice bearer, the TFs of 1x0, 1x39, 1x81 do not have identical BLERs for a given SIR. If the solution provided by this invention is not used, the downlink SIR is then aligned to the worse case, generating a power overhead and capacity decrease. Due to a variation of the number of bits, the Viterbi coder gain varies as well. The 1x0 and 1x148 for SRB, and 1x0, 1x39, 1x81 for AMR voice don't have identical or substantially identical BLER for a given SIR (see Figure 3).

The power management method in accordance with the embodiments of the invention aims for keeping the received BLER more or less constant for different TFs. According to an embodiment of the invention the control block 5 is arranged to adaptively control the downlink transmission power of the base station depicted in Figure 2. To be able to do this, the control block 5 is arranged to receive from the medium access control (MAC) layer the TF indicators (TFIs) of different transmission channels of block 1.

The control block 5 introduces a power correction to DPDCH power, pre-calculated at establishment for each transport format, based on coder performance. The protection is then maintained roughly equivalent with a same SIR, whatever TF is used. The power control outer loop is not triggered, and the BLER distribution is tightened.

The method of determining the downlink transmission power is defined in 3GPP specification 25.214 (Section 5.2.1.2.2 in the specification TS 25.214 "Physical layer procedures (FDD)", v 3.9.0, Release 1999, published by the 3GPP in December 2001). Upon receiving the TPC commands UTRAN adjusts its downlink DPCCH/DPDCH power accordingly. For DPC_MODE = 0, UTRAN estimates the transmitted TPC command $TPC_{est}$ to be 0 or 1, and updates the power every slot. If DPC_MODE = 1, UTRAN estimates the transmitted TPC command $TPC_{est}$ over three slots to be 0 or 1, and shall update the power every three slots. A receiving terminal checks the downlink power control mode (DPC_MODE) before generating the TPC command. If DPC_MODE = 0, the terminal sends a unique TPC command in each slot and the TPC command generated is transmitted in the first available TPC field in the uplink DPCCH. If however, DPC_MODE = 1, the terminal repeats the same TPC command over 3 slots and the new TPC command is transmitted such that there is a new command at the beginning of the frame. The DPC_MODE parameter is a terminal specific parameter controlled by the UTRAN.

After estimating the $k$:th TPC command, UTRAN adjusts the current downlink power $P(k-1)$[dB] to a new power $P(k)$ [dB] according to the following formula:

$$P(k) = P(k - 1) + P_{TPC}(k) + P_{bal}(k),$$

where $P_{TPC}(k)$ is the $k$:th power adjustment due to the inner loop power control, and $P_{bal}(k)$ [dB] is a correction according to the downlink power control procedure for balancing radio link powers towards a common reference power. The power balancing procedure and control of the procedure is described in 3GPP TS 25.433: "UTRAN Iub Interface NBAP Signalling".

$P_{TPC}(k)$ is calculated according to the following formulas.

If the value of *Limited Power Increase Used* parameter is 'Not used', then

$$P_{TPC}(k) = \begin{cases} + \Delta_{TPC} & \text{if } TPC_{est}(k) = 1 \\ - \Delta_{TPC} & \text{if } TPC_{est}(k) = 0 \end{cases} \text{,[dB].} \quad (1)$$

If the value of *Limited Power Increase Used* parameter is 'Used', then the $k$:th inner loop power adjustment is calculated as:

$$P_{TPC}(k) = \begin{cases} + \Delta_{TPC} & \text{if } TPC_{est}(k) = 1 \text{ and } \Delta_{sum}(k) + \Delta_{TPC} < \text{Power\_Raise\_Limit} \\ 0 & \text{if } TPC_{est}(k) = 1 \text{ and } \Delta_{sum}(k) + \Delta_{TPC} \geq \text{Power\_Raise\_Limit} \\ - \Delta_{TPC} & \text{if } TPC_{est}(k) = 0 \end{cases} \text{,[dB] (2)}$$

where

$$\Delta_{sum}(k) = \sum_{i=k-\text{DL\_Power\_Averaging\_Window\_Size}}^{k-1} P_{TPC}(i)$$

is the temporary sum of the last *DL_Power_Averaging_Window_Size* inner loop power adjustments (in dB).

For the first (*DL_Power_Averaging_Window_Size* - 1) adjustments after the activation of the limited power increase method, formula (1) is used instead of formula (2). *Power_Raise_Limit* and *DL_Power_Averaging_Window_Size* are parameters configured in the UTRAN.

In accordance with an embodiment of the invention the DPDCH_power = P(k) formula is modified so that it becomes DPDCH_power = P(k) + $P_c$(tfci). P(k) remains unchanged.

The power correction hereinafter denoted $P_c$(tfci) is added to the power P(k) in order to improve downlink power control performance.

The power correction which is a function of the transport format combination (TFC), is added to the DPDCH power transmitted by the base station. The power correction relative to coder protection variation is in this case called "coding correction", whereas the the power correction relative to transport block length variation is called "length correction". The power corrections corresponding to the "coding correction" can be obtained from simulations, whereas the power corrections corresponding to the "length correction" can be obtained either from simulations or from a statistical analysis.

Power corrections $P_c$(tfci) are calculated for each possible value of the transport format combination indicator (TFCI) at radio link establishment in the base station. However, it is to be noted that the way the power correction $P_c$ (tfci) is obtained in this description is non-limitative.

$P_c$(tfci) is equal to the maximum of the sum of power corrections (coding and length correction) for each TrCH (Transport Channel) multiplexed in the Coded Composite Transport Channel (CCTrCH) for a given TFCI. When power control is enabled, the power correction $P_c$(tfci) is applied. Power corrections $P_c$(tfci) can be negative or positive values, depending on the TFCI.

According to another aspect of the invention a different power correction is applied for each DPDCH part allocated to each TRCH. This implementation solution provides more accurate power management. But a simplification can be done by using the maximum of all TRCH corrections as a common DPDCH correction as explained above.

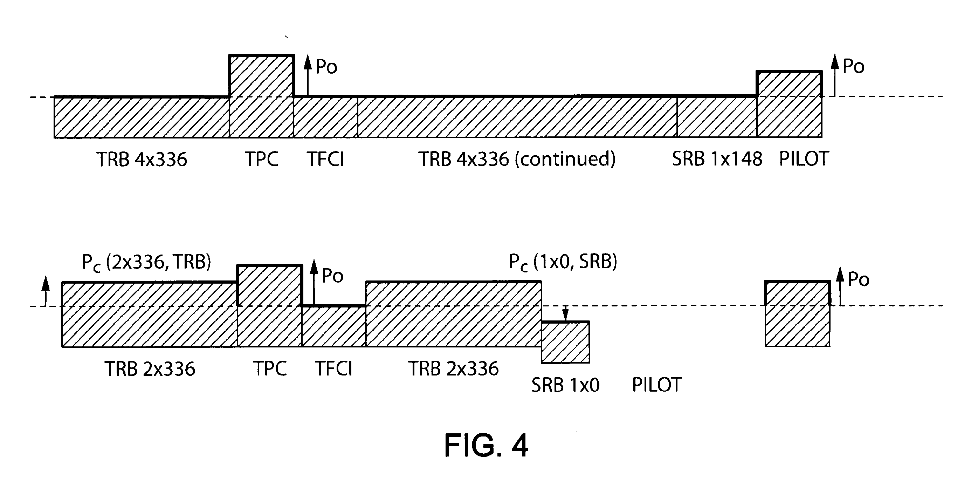

In Figure 4, the solution provided by the invention (lower part of the figure) is compared to a conventional situation (upper part of the figure) in which no power corrections are applied. The following remarks can be made. TPC, TFCI and pilot data are not affected, i.e. no power corrections are applied. In the upper part of Figure 4, traffic bearer (TRB) TF is 4x336 and no power correction is applied. However, in the lower part of Figure 4, TRB TF is different and therefore, the power correction $P_c$(tfci) is needed. As a result the transmission powers of the TRB blocks of 2x336 are increased to obtain sufficient BLER at the reception.

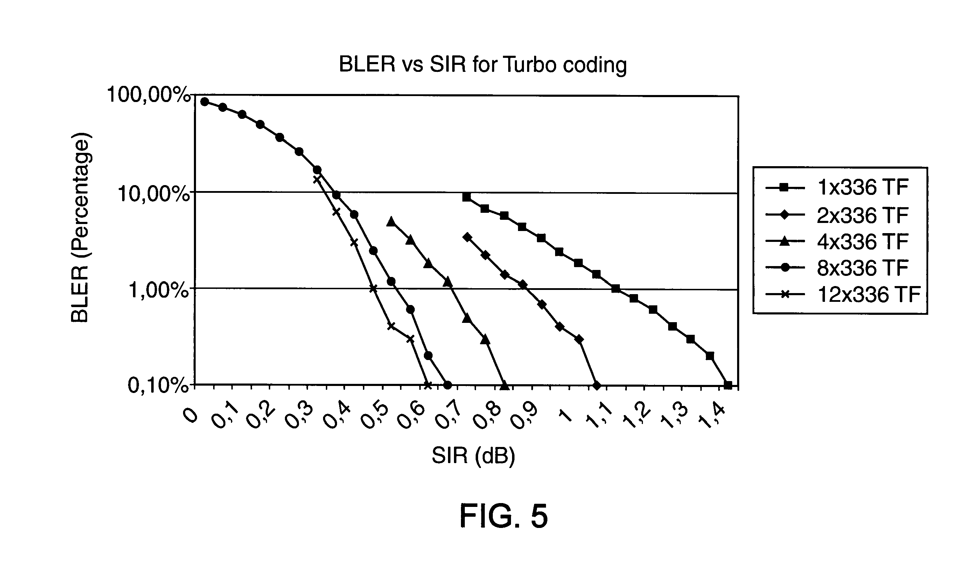

Reference can now be made to Figure 5, which illustrates simulation results of the BLER vs SIR variation for a packet switched (PS) downlink 384 kbits/s call in the presence of Gaussian noise and employing Turbo coding. From Figure 5 it can be seen that for a given SIR value, the usage of TF of 2x336 results in higher BLER than in the case of TF of 4x336. Therefore, this needs to be compensated by increasing the transmission power for TF of 2x336 as can be seen from Figure 4. On the other hand, the SRB 1x0 is transmitted by using lower transmission power than the SRB 1x148. Figure 3 illustrates this situation since for a given SIR, for the TF of 1x0 lower transmission power is sufficient compared to the TF of 1x148 to achieve a target BLER.

More simulation results can be seen in Tables 1, 2 and 3.

Table 1. Power corrections when Turbo coding is used.

|  | Power corrections (dB) for different TFs | | | | |
|---|---|---|---|---|---|
| BLER | 1 x336 | 2x336 | 4x336 | 8x336 | 12x336 |
| 0.50% | 0.73 | 0.45 | 0.21 | 0.07 | 0 |
| 1 % | 0.65 | 0.40 | 0.21 | 0.06 | 0 |
| 2% | 0.55 | 0.34 | 0.17 | 0.05 | 0 |
| 5% | 0.45 | 0.3 | 0.13 | 0.04 | 0 |
| Av. Correction (dB) | 0.6 | 0.4 | 0.2 | 0.1 | 0 |
| Max. error (dB) | -0.15 | -0.1 | -0.07 | -0.06 | 0 |

In Table 1, the TF of 12x336 is the format in which no power corrections are applied. For other TFs, the power corrections were calculated for each desired BLER. Then the average correction was calculated for different TFs keeping in mind that the minimum correction step size is 0.1 dB. The maximum error correction was calculated by comparing the average correction to the correction terms corresponding to different BLER values and taking the highest error. In practise the given maximum error term is even smaller, since ususally BLER values of 1% and 2% are used. It is also worth of noticing that in these simulation Turbo coding was used and since this coding is rather efficient, the power corrections are rather small, but efficient; a slight variation in SIR results in large variation of BLER for Turbo encoder.

Table 2. Power corrections when Viterbi coding is used. The transport channel is of the type of 3,4 Kbit/s SRB (signalling radio bearer).

|  | Power corrections (dB) for different TFs | |
|---|---|---|
| BLER | 1x0 | 1x148 |
| 0.50% | -1.35 | 0 |
| 1% | -1.5 | 0 |
| 2% | -1.7 | 0 |
| 5% | -1.95 | 0 |

(continued)

|  | Power corrections (dB) for different TFs | |
| --- | --- | --- |
| Av. Correction (dB) | -1.6 | 0 |
| Max. error (dB) | -0.35 | 0 |

Table 3. Power corrections when Viterbi coding is used.

|  | Power corrections (dB) for different TFs | | |
| --- | --- | --- | --- |
| BLER | 1x0 | 1 x39 | 1x81 |
| 0.50% | -1.2 | -0.3 | 0 |
| 1 % | -1.3 | -0.25 | 0 |
| 2% | -1.5 | -0.3 | 0 |
| 5% | -1.5 | -0.35 | 0 |
| Av. Correction (dB) | -1.4 | -0.3 | 0 |
| Max. error (dB) | -0.3 | -0.05 | 0 |

On the other hand if Viterbi coding is applied (simulation results can be seen in Tables 2 & 3) it can be noticed that much higher correction terms are required in this case due to Viterbi encoding inefficiency.

Even if the embodiments of the invention were described above in the context of UMTS, it is appreciated that the invention is equally applicable to other communication systems as well.

**Claims**

1. A method of adjusting transmission power of at least one physical channel of a base station in a radio communication system, wherein at least one transport channel is mapped to the at least one physical channel, the method comprising:

   - determining a transport format of the at least one transport channel; and
   - adjusting the transmission power of the at least one physical channel based on parameters comprising the transport format.

2. The method according to claim 1, wherein the at least one physical channel is divided into several parts corresponding to different transport channels, the method further comprising adjusting separately the transmission power of each part of the at least one physical channel.

3. The method according to claim 1, the method further comprising calculating a transmission power correction term $P_c$ for each transport channel c corresponding to the at least one physical channel, determining a maximum power correction term $P_c$ for the corresponding physical channel and adjusting the transmission power of the at least one physical channel based on the maximum power correction term $P_c$.

4. The method according to claim 1, wherein the radio communication system uses outer loop power control, the method further comprising avoiding triggering of the outer loop power control when adjusting the transmission power.

5. A base station in a radio communication system arranged for adjusting transmission power of at least one physical channel, at least one transport channel being mapped to the at least one physical channel, the base station comprising:

   - means for obtaining a transport format of the at least one transport channel; and
   - means for adjusting the transmission power of the at least one physical channel based on parameters comprising the transport format.

6. The base station according to claim 5, wherein the at least one physical channel is divided into several parts corresponding to different transport channels, the base station further comprising means for adjusting separately the transmission power of each part of the at least one physical channel.

7. The base station according to claim 5, the base station further comprising means for calculating a transmission power correction term $P_c$ for each transport channel c corresponding to the at least one physical channel, means for determining a maximum power correction term $P_c$ for the corresponding physical channel and means for adjusting the transmission power of the at least one physical channel based on the maximum correction term $P_C$.

8. The base station according to claim 5, wherein the base station uses outer loop power control, the base station further comprising means for avoiding triggering of the outer loop power control when adjusting the transmission power.

1 TRAME
(10ms)

#0 #1 #2 #14

1 TIMES LOT
(666 µs)

| DATA 1 | TPC | TFCi | DATA 2 | PL |
|--------|-----|------|--------|-----|

FIG. 1

EP 1 739 853 A1

FIG. 2

BLER vs SIR Viterbi coder

FIG. 3

EP 1 739 853 A1

TRB 4x336      TPC   TFCI      TRB 4x336 (continued)      SRB 1x148   PILOT

$P_C$ (2x336, TRB)                                    $P_C$ (1x0, SRB)

TRB 2x336      TPC   TFCI      TRB 2x336                                    PILOT
                                            SRB 1x0

FIG. 4

EP 1 739 853 A1

BLER vs SIR for Turbo coding

FIG. 5

EP 1 739 853 A1

**European Patent Office**

**EUROPEAN SEARCH REPORT**

Application Number

EP 06 29 1090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/036403 A1 (SHIU DA-SHAN [US] ET AL) 20 February 2003 (2003-02-20) * figures 2a,9,10 * * paragraphs [0007] - [0009] * * paragraphs [0036], [0037] * * paragraphs [0041], [0042] * * paragraphs [0112] - [0117] * * paragraphs [0126], [0127] * ----- | 1-3,5-7 | INV. H04B7/005 |
| X | WO 03/079601 A (QUALCOMM INC [US]) 25 September 2003 (2003-09-25) * figures 5,14,15 * * paragraphs [1039], [1040] * * paragraphs [1142] - [1150] * ----- | 1,3-5,7,8 | |
| X | US 2003/148781 A1 (SOMMER VOLKER [DE]) 7 August 2003 (2003-08-07) * abstract; figure 1 * * paragraphs [0005] - [0053] * ----- | 1,5 | |
| A | US 2005/069044 A1 (IACONO ANA LUCIA [US] ET AL) 31 March 2005 (2005-03-31) * the whole document * ----- | 1-8 | TECHNICAL FIELDS SEARCHED (IPC) H04B |

The present search report has been drawn up for all claims

| Place of search | Date of completion of the search | Examiner |
|---|---|---|
| Munich | 20 October 2006 | Cabañas Prieto, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 29 1090

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2006

| Patent document cited in search report | | Publication date | Patent family member(s) | | | Publication date |
|---|---|---|---|---|---|---|
| US 2003036403 | A1 | 20-02-2003 | AU | 2002324748 | A1 | 03-03-2003 |
| | | | CN | 1568587 | A | 19-01-2005 |
| | | | EP | 1419590 | A2 | 19-05-2004 |
| | | | JP | 2005500735 | T | 06-01-2005 |
| | | | TW | 231665 | B | 21-04-2005 |
| | | | WO | 03017527 | A2 | 27-02-2003 |
| | | | US | 2006040698 | A1 | 23-02-2006 |
| WO 03079601 | A | 25-09-2003 | AU | 2003233401 | A1 | 29-09-2003 |
| | | | BR | 0308421 | A | 15-03-2005 |
| | | | CA | 2479122 | A1 | 25-09-2003 |
| | | | CN | 1650562 | A | 03-08-2005 |
| | | | EP | 1483861 | A1 | 08-12-2004 |
| | | | JP | 2005521293 | T | 14-07-2005 |
| | | | MX | PA04008977 | A | 13-12-2004 |
| | | | US | 2003174676 | A1 | 18-09-2003 |
| US 2003148781 | A1 | 07-08-2003 | CN | 1444806 | A | 24-09-2003 |
| | | | WO | 0211310 | A2 | 07-02-2002 |
| | | | DE | 10036930 | A1 | 14-02-2002 |
| | | | EP | 1305895 | A2 | 02-05-2003 |
| | | | JP | 2004505538 | T | 19-02-2004 |
| US 2005069044 | A1 | 31-03-2005 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HARRI HOLMA ; ANTTI TOSKALA.** WCDMA for UMTS

- Multiplexing and channel coding (FDD. *3GPP,* October 1999